# FASCICULE DE BREVET EUROPEEN

(11) **EP 1 194 808 B1**
(45) Date de publication et mention de la délivrance du brevet: **29.01.2003**
(21) Numéro de dépôt: 00939006.3
(22) Date de dépôt: 10.07.2000
(51) Int. Cl.: G02C 5/22

(54) **CHARNIERE ELASTIQUE DE GRANDE SOUPLESSE**
FEDERSCHARNIER MIT GROSSER FLEXIBILITÄT
HIGHLY FLEXIBLE ELASTIC HINGE

(30) Priorité: 13.07.1999 FR 9909299
(43) Date de publication de la demande: 10.04.2002
(73) Titulaire: CHEVASSUS S.A., F-39400 Morez (FR)
(72) Inventeur: DESBIEZ-PIAT, Christophe, F-88700 Rambervillers (FR)
(74) Mandataire: Moinas, Michel
(86) Numéro de dépôt international: IB0000932
(87) Numéro de publication internationale: WO01004690

(56) Documents cités:
- WO-A-92/15916
- DE-A- 19 511 167
- FR-A- 2 698 121
- FR-A- 2 746 151
- FR-A- 2 769 722
- US-A- 4 932 771

## Description

L'invention se rapporte à une charnière élastique de monture de lunettes, et plus particulièrement à une charnière qui comprend deux éléments fixe et mobile reliés respectivement à une face et à une branche de la monture.

Les deux éléments sont articulés l'un par rapport à l'autre autour d'un axe de rotation par une tête de pivotement de l'un des éléments insérée dans une tête de pivotement de l'autre élément et par un lien disposé à l'intérieur de deux éléments et traversant en enfilade les têtes de pivotement.

Une charnière de ce type est connue notamment de la demande de brevet FR 2 698 121 publiée le 20 mai 1994. Les têtes de pivotement sont de forme sphérique et pivotent autour d'un axe immatériel passant par le centre des deux sphères.

Les deux éléments de charnière sont percés d'un canal interne pour permettre le passage en enfilade d'un brin ancré dans chaque canal par une extrémité. La force de traction exercée par l'élément fixe sur l'élément mobile est proportionnelle à la déformation du brin dans le cas où celui-ci est par nature élastique. Si le brin est inextensible, la force de traction est proportionnelle à la déformation d'un ressort monté entre l'élément mobile et le point d'ancrage du brin.

Lorsque la branche de la monture est en position d'ouverture normale, le brin s'étend parallèlement à la direction d'alignement axial des deux éléments, tout en étant décalé par rapport à l'axe de rotation d'un côté extérieur de la monture. Par extérieur, on entend la région qui n'est pas comprise entre la face et les deux branches en position d'ouverture normale. A contrario, la région comprise entre la face et les deux branches forme l'intérieur de la monture.

Lorsque l'on ferme la monture, le brin se décale progressivement d'un côté à l'autre par rapport à l'axe de rotation. La force de traction engendre un couple de rappel qui s'annule lorsque la fibre moyenne du brin passe à l'aplomb de l'axe de rotation. Il en résulte un effet bi-stable, qui devrait conférer à la charnière une position de fermeture et une position d'ouverture normale stables.

On relève cependant que rien ne permet de s'opposer à la force de traction dans la position d'ouverture normale, dans laquelle le brin est rectiligne. Etant décalé vers l'extérieur par rapport à l'axe de rotation, le brin exerce sur l'élément mobile un couple qui conduit à un pivotement de la branche vers une position d'ouverture supplémentaire.

Autrement dit, dans la charnière connue, l'effet bi-stable, s'il conduit à une position de fermeture stable, ne semble pas conduire en revanche vers une position stable d'ouverture normale mais bien vers une position stable de surouverture. Il est clair qu'une telle situation n'apporte pas de confort d'utilisation de la monture, et diminue la stabilité du port de la monture.

Une autre charniére de ce type est connue de la publication internationale WO-A-92/15916.

L'un des buts de l'invention est de perfectionner un type de charnières élastiques utilisant un lien pour assembler entre eux les éléments reliés à la face et à la branche, afin de conférer aux positions de fermeture et d'ouverture normale un caractère stable, et un caractère instable à la position d'ouverture supplémentaire.

A cet effet, l'invention a pour objet une charnière élastique de monture de lunettes selon la revendication 1.

Lorsque la branche est en position d'ouverture normale, les deux butées complémentaires permettent de neutraliser le couple tendant à faire pivoter la branche vers l'extérieur dans une position de surouverture. Autrement dit, la position d'ouverture normale est une position stable.

Les butées sont agencées par complémentarité de forme en une interface de pivotement pour permettre à la branche de pivoter de la position d'ouverture normale stable à une position d'ouverture supplémentaire vers l'extérieur. Au cours de la surouverture, les têtes de pivotement s'écartent l'une de l'autre et les charnons mâles et femelles réduisent leur surface de contact.

Les butées sont formées à l'embouchure du canal du côté extérieur de la monture pour que le lien traversant en enfilade les têtes de pivotement reste décalé vers l'intérieur par rapport au deuxième axe de rotation. De cette façon, la force de traction du lien crée un couple de rappel de la branche tendant à s'opposer au pivotement de la branche en surouverture. Ce couple de rappel n'est équilibré que lorsque les têtes de pivotement sont à nouveau insérées l'une dans l'autre et que les charnons mâles sont en contact avec une surface de guidage reliant les deux chamons femelles, c'est-à-dire dans la position d'ouverture normale. Autrement dit, la position de surouverture est instable.

D'autres avantages de l'invention apparaîtront à la lecture de la description d'un mode de réalisation illustré par les dessins.

La figure 1 est une vue en coupe longitudinale d'une branche d'une monture de lunettes articulée à un tenon de face par une charnière selon l'invention.

La figure 2a montre dans le plan de coupe longitudinale de la figure 1, un élément de charnière relié à la face.

La figure 2b est une vue de dessus de la figure 2a.

La figure 3a montre dans le plan de coupe longitudinale de la figure 1, un élément de charnière relié à la branche.

La figure 3b est une vue de dessus de la figure 3a.

La figure 4a est une vue en coupe longitudinale de la charnière de la figure 1 lorsque la branche est en position d'ouverture normale, c'est-à-dire sensiblement perpendiculaire à la face de la monture.

La figure 4b est une vue en coupe longitudinale de la charnière de la figure 1 lorsque la branche est en position de fermeture, c'est-à-dire sensiblement parallèle à la face.

La figure 4c est une vue en coupe longitudinale de la charnière de la figure 1 lorsque la branche est en position d'ouverture supplémentaire, c'est-à-dire sensiblement oblique vers l'extérieur de la monture vis-à-vis de la face.

La figure 5 est un diagramme d'effort en fonction de la position angulaire de la branche vis-à-vis de la face comparant une charnière classique à une charnière selon l'invention.

Dans la suite la description, un même élément porte une même référence sur les différentes figures.

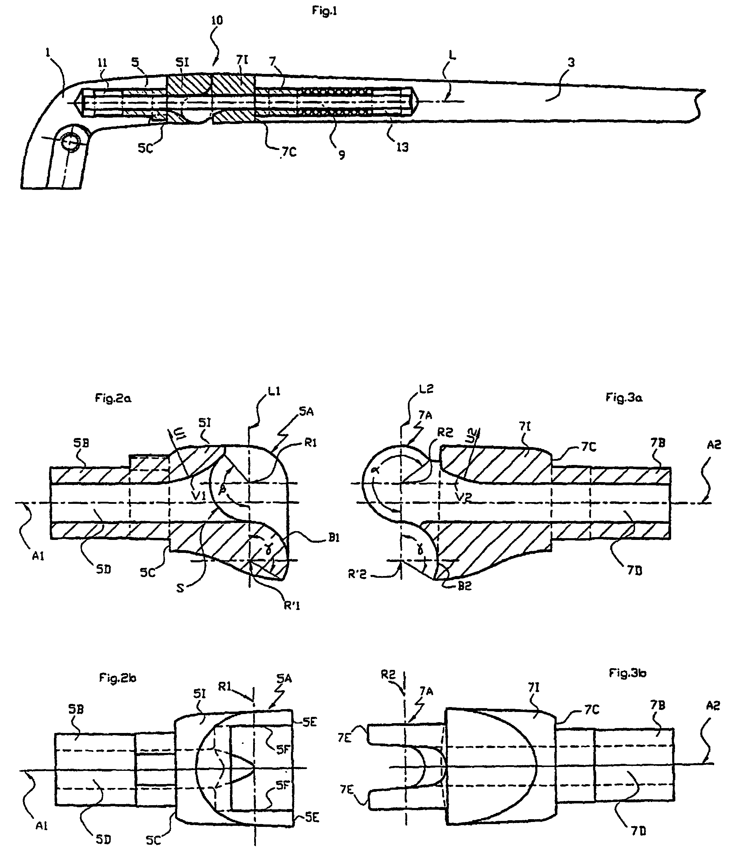

La charnière élastique selon l'invention s'applique à toute monture de lunettes qui comprend de façon connue deux verres reliés entre eux par un pont pour former une face sensiblement plane, et deux branches latérales qui sont articulées chacune à la face par une charnière. Sur la figure 1, on a représenté une branche 3 de la monture articulée à un tenon 1 de face par une charnière 10. Le tenon est coudé pratiquement à angle droit, de sorte qu'il présente une direction longitudinale L qui est sensiblement perpendiculaire à la face, non représentée.

Le tenon 1 est percé suivant la direction longitudinale L d'un trou borgne pour y loger un élément de charnière fixe 5 relié à la face. De même, la branche 3 est percée d'un trou borgne suivant une direction sensiblement parallèle à la branche pour y loger un élément de charnière mobile 7 relié à la branche. Les deux éléments de charnière possèdent l'un et l'autre une tête de pivotement 5A,7A qui surmonte un corps intermédiaire 5l,7l et un corps cylindrique 5B,7B. Ce dernier s'étend suivant une direction axiale A1,A2.

Le corps cylindrique 5B de l'élément de charnière fixe 5 s'insère dans le trou borgne du tenon de face 1 jusqu'à venir en butée contre ce dernier par un décrochement 5C. De même, le corps cylindrique 7B de l'élément de charnière 7 mobile s'insère dans le trou borgne de la branche 3 jusqu'à venir en butée contre cette dernière par un décrochement 7C. Par conséquent, les têtes 5A et 7A font saillie par rapport aux trous borgnes du tenon de face 1 et de la branche 3 dans lesquels les éléments de charnière sont logés.

La tête de pivotement 7A de l'élément de charnière mobile 7 comprend, figures 3a-3b, deux charnons mâles cylindriques et identiques 7E qui s'étendent parallèlement et de façon symétrique par rapport à la direction axiale A2 de l'élément de charnière. Les deux charnons 7E s'inscrivent, sur un secteur d'angle α d'environ 230 degrés, dans un cylindre épure dont l'axe constitue un axe de rotation R2 de l'élément de charnière 7.

La tête de pivotement 5A de l'élément de charnière 5 fixe possède, figures 2a-2b, deux chamons femelles identiques 5E qui s'étendent parallèlement et de façon symétrique à la direction axiale A1 de l'élément de charnière. Les deux chamons femelles sont reliés par une surface de guidage S qui forme le fond d'une cavité ouverte du côté opposée au corps intermédiaire 5l. La surface de guidage S épouse, sur un secteur d'angle β d'environ 150 degrés, la paroi latérale d'un cylindre épure dont l'axe constitue un axe de rotation R1 de l'élément de charnière 5.

Les deux éléments de charnière 5 et 7 sont percés l'un et l'autre d'un canal interne 5D,7D qui s'étend suivant la direction axiale A1,A2 du corps cylindrique 5B,7B et qui débouche dans la tête 5A,7A des éléments de charnière. Les canaux internes sont destinés à loger un lien traversant en enfilade les éléments de charnière et les chamons mâles et femelles pour les assembler l'un à l'autre en pivot.

La surface de guidage S, figure 2a, est déportée vers l'intérieur de la monture par rapport au canal 5D. Autrement dit, l'axe de rotation R1 est décalé vers l'intérieur par rapport à la direction axiale A1 du canal 5D. De même, figure 3a, les deux chamons mâles 7E sont déportés vers l'intérieur de la monture par rapport au canal 7D. Autrement dit, l'axe de rotation R2 est décalé vers l'intérieur par rapport à la direction axiale A2 du canal 7D. Comme cela sera indiqué plus en avant, l'axe de rotation R2 est confondu avec l'axe de pivotement de la branche entre les positions de fermeture et d'ouverture normale.

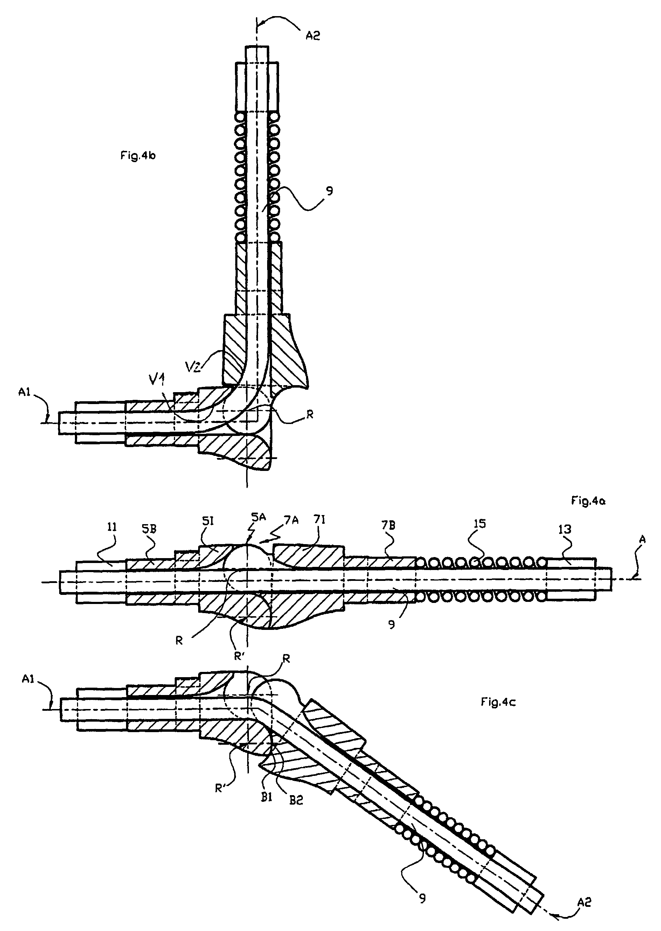

Comme illustré par la figure 4a, du côté de l'élément de charnière 5 relié à la face, le lien 9 est serti dans une douille cylindrique 11 qui possède un diamètre sensiblement égal à celui du corps cylindrique 5B et contre lequel elle vient en butée. Du côté de l'élément de charnière mobile 7, le lien 9 est serti dans une douille cylindrique 13 qui possède un diamètre sensiblement égal à celui du corps cylindrique 7B.

Dans le mode de réalisation choisi pour illustrer l'invention, le lien 9 est souple et inextensible, c'est-à-dire qu'il peut épouser une courbure sans s'allonger de façon significative par rapport à sa longueur rectiligne au repos. Dans ce cas, le lien 9 est enfilé à l'intérieur d'un ressort hélicoïdal 15 avant d'être serti dans la douille cylindrique 13 du côté de l'élément de charnière relié à la branche. La longueur du lien entre les deux douilles 11 et 13 est choisie pour contraindre le ressort hélicoïdal 15 à se comprimer. Par cet agencement, le ressort vient en butée d'une part contre le corps cylindrique 7B et d'autre part contre la douille cylindrique 13.

Selon un autre mode réalisation de l'invention, non illustré par les figures, le lien est par nature élastique, c'est-à-dire qu'il s'allonge de façon proportionnelle à une force de traction exercée à l'une de ses extrémités. Dans ce cas, la douille cylindrique 13 du côté de l'élément de charnière mobile vient directement en butée contre le corps cylindrique 7B, le lien étant étiré entre les deux douilles par rapport à sa longueur au repos. Il est encore prévu de monter un ressort avec un lien élastique par nature.

Lors de l'assemblage des deux chamons à l'aide du lien, la tête 7A du chamon de branche s'insère dans la tête 5A du charnon de face. Dans le même temps, les chamons mâles 7E viennent en contact contre la surface de guidage S de la tête 5A en s'insérant entre les chamons femelles 5E. L'écartement des deux charnons femelles 5E est légèrement supérieur à l'écartement des deux charnons mâles 7E pour permettre l'insertion. Le rayon de la surface de guidage S est le même que le rayon des chamons femelles cylindriques 5E, de sorte que les axes de rotation R1 et R2 des chamons femelles et mâles coïncident. La surface de guidage S permet ainsi à l'élément de charnière mobile 7 de pivoter par rapport à l'élément de charnière fixe 5 autour d'un axe de rotation R désignant indifféremment l'axe de rotation R1 ou l'axe de rotation R2.

Lors du montage de la monture, figure 1, on assemble tout d'abord les deux éléments de charnière 5 et 7 par l'insertion du lien 9 et par le sertissage de ce dernier dans les douilles 11 et 13, après avoir enfilé le lien dans le ressort hélicoïdal 15 dans le cas d'un lien inextensible. Les deux éléments assemblés se présentent alors dans la situation illustrée par la figure 4a. Ensuite, on insère ensemble l'élément de charnière 5 et la douille cylindrique 11 dans le trou borgne du tenon de face 1, et on insère ensemble l'élément de charnière 7, le ressort hélicoïdal 15 et la douille cylindrique 13, dans le trou borgne de la branche 3. Les éléments de charnière sont solidarisés au tenon et à la branche par exemple par collage ou emmanchement à force.

La figure 4a illustre une position d'ouverture normale de la branche par rapport à la face de la monture. Dans cette position, les éléments de charnière 5 et 7 sont alignés, c'est-à-dire que les directions axiales A1 et A2 coïncident entre elles en une seule direction axiale A. Le lien 9 est rectiligne et parallèle à la direction axiale A.

La figure 4b illustre une position de fermeture de la branche par rapport à la face de la monture. Dans cette position, les deux éléments de charnière sont à angle droit, c'est-à-dire que leurs directions axiales A1 et A2 sont sensiblement perpendiculaires. Le lien 9 est courbé dans la région d'insertion des têtes de pivotement 5A et 7A pour suivre le changement de direction des directions axiales A1 et A2.

Pour ouvrir ou pour fermer la branche de la monture, l'élément de charnière mobile relié à la branche pivote autour de l'axe de rotation R par rapport à l'élément de charnière fixe relié à la face. Par convention, on désigne par l'intérieur de la monture la région comprise entre la face et les deux branches. De cette façon, la fermeture correspond à une rotation de la branche vers l'intérieur de la monture, et l'ouverture, à une rotation vers l'extérieur.

Lorsque la branche pivote de la position d'ouverture normale, figure 4a, à la position de fermeture, figure 4b, le lien 9 se décale d'un côté extérieur à un côté intérieur par rapport à l'axe de rotation R. Le couple de rappel créé par la force de traction du lien s'annule lorsque la fibre moyenne du lien est à l'aplomb de l'axe de rotation. D'où un effet bi-stable qui tend à rappeler la branche vers la position de fermeture ou vers la position d'ouverture normale selon que le lien est du côté intérieur ou extérieur par rapport à l'axe de rotation.

Lorsque la branche est en position d'ouverture normale, figure 4a, la fibre moyenne du lien 9 s'étend parallèlement à la direction axiale commune A, et est décalée vers l'extérieur de la monture par rapport à l'axe de rotation R. L'élément de charnière 5 exerce alors par l'intermédiaire du lien 9 une force de traction sur l'élément de charnière 7, qui crée un couple tendant à faire pivoter la branche vers l'extérieur dans une position de surouverture.

Selon l'invention, la tête de pivotement femelle 5A possède à l'embouchure du canal 5D une butée B1 qui forme par complémentarité de forme avec une butée B2 à l'embouchure du canal 7D de la tête de pivotement 7A, une interface de pivotement autour d'un deuxième axe de rotation R'. Les butées B1 et B2 sont formées du côté extérieur de la monture.

Lorsque la branche est en position d'ouverture normale, figure 4a, le lien 9 est rectiligne et disposé entre les deux axes de rotation R et R'. Les deux butées complémentaires B1 et B2 permettent de neutraliser le couple tendant à faire pivoter la branche vers l'extérieur dans une position de surouverture. Autrement dit, la position d'ouverture normale est une position stable.

La butée B1 de la tête de pivotement 5A s'inscrit, figure 2a, sur un secteur d'angle d'environ 120 degrés, dans un cylindre épure dont la direction axiale constitue un deuxième axe de rotation R'1 parallèle au premier axe de rotation R1. Les deux axes de rotation R1 et R'1 sont alignés suivant une direction L1 sensiblement perpendiculaire à la direction axiale A1 de l'élément de charnière 5 et espacés l'un de l'autre de sorte que la surface de guidage S reliant les deux charnons femelles 5E est tangente à la butée B1.

De même, la butée B2 de la tête de pivotement 7A épouse, figure 3a, sur un secteur d'angle d'environ γ 120 degrés, un cylindre épure dont la direction axiale constitue un deuxième axe de rotation R'2 parallèle au premier axe de rotation R2. Les deux axes de rotation R2 et R'2 sont alignés suivant une direction L2 sensiblement perpendiculaire à la direction axiale A2 de l'élément de charnière 7 et espacés l'un de l'autre de sorte que chacun des charnons mâles 7E est tangent avec la butée B2.

La butée B1 est déportée vers l'extérieur de la monture par rapport au canal 5D de l'élément de charnière 5. Autrement dit, le deuxième axe de rotation R'1 est décalé vers l'extérieur de la monture par rapport à la direction axiale A1. De même, la butée B2 est déportée vers l'extérieur de la monture par rapport au canal 7D de l'élément de charnière 7. Autrement dit, le deuxième axe de rotation R'2 est décalé vers l'extérieur de la monture par rapport à la direction axiale A2.

Lors de l'assemblage des deux chamons à l'aide du lien 9, les butées B1 et B2 viennent en contact l'une contre l'autre. Ces butées ont un même rayon de courbure, de sorte que les deuxièmes axes de rotation R'1 et R'2 coïncident lorsque les têtes de pivotement sont assemblées par le lien 9. La butée B1 permet à l'élément de charnière 7 de pivoter par rapport à l'élément de charnière 5 autour du deuxième axe de rotation R' désignant indifféremment l'axe de rotation R'1 ou R'2.

Les butées B1 et B2 sont agencées par complémentarité de forme en une interface de pivotement pour permettre à la branche de pivoter de la position d'ouverture normale stable à une position d'ouverture supplémentaire vers l'extérieur, illustrée par la figure 4c.

Au cours de la surouverture, les têtes de pivotement 5A,7A s'écartent ou se déboîtent l'une de l'autre et les charnons mâles 7E et femelles 5E réduisent leur surface de contact.

Le lien 9 traverse en enfilade les têtes de pivotement 5A et 7A et prend appui sur la butée B1 du côté extérieur de la monture. De cette façon, il reste décalé vers l'intérieur par rapport au deuxième axe de rotation R' formé par l'interface de pivotement des butées B1 et B2.

Par cet agencement, la force de traction du lien crée un couple de rappel de la branche tendant à s'opposer au pivotement de la branche par rapport au deuxième axe de rotation R'. Ce couple de rappel n'est équilibré que lorsque les têtes de pivotement sont à nouveau insérées l'une dans l'autre et que les charnons mâles sont en contact avec la surface de guidage S relient les deux charnons femelles, c'est-à-dire dans la position d'ouverture normale. Autrement dit, la position de surouverture est instable.

Il faut noter avantageusement que le ressort 15 agit en butée de surouverture lorsqu'il est comprimé à bloc.

De préférence, le canal 7D, figure 3a, débouche dans la tête de pivotement 7A par une surface d'enroulement V2 formée dans le corps intermédiaire 7l et tournée vers l'intérieur de la monture, c'est-à-dire ayant un vecteur de courbure U2 dirigé vers l'intérieur de la monture selon la convention définie précédemment.

De préférence également, figure 2a, le canal 5D débouche dans la tête de pivotement 5A par une surface d'enroulement V1 formée dans le corps intermédiaire 5l et tournée vers l'intérieur de la monture, c'est-à-dire ayant un vecteur de courbure U1 dirigé vers l'intérieur de la monture.

Par ces agencements, le lien 9 se déforme en épousant les surfaces d'enroulement V1,V2 lorsque la branche pivote autour l'axe de rotation R dans sa position de fermeture. Avantageusement, la courbure des surfaces d'enroulement V1 et V2 est la même, et est par exemple circulaire pour accompagner l'enroulement du lien.

Selon une variante de réalisation de l'invention, les charnons femelles 5E ont une paroi interne 5F légèrement inclinée, par exemple de 15 degrés, par rapport à la direction axiale A1. Les charnons mâles 7E peuvent ainsi se déplacer suivant la direction d'inclinaison des charnons femelles 5E. Il en résulte un possible mouvement de déhanchement de la branche par rapport à la face, dans un plan perpendiculaire au plan de pivotement.

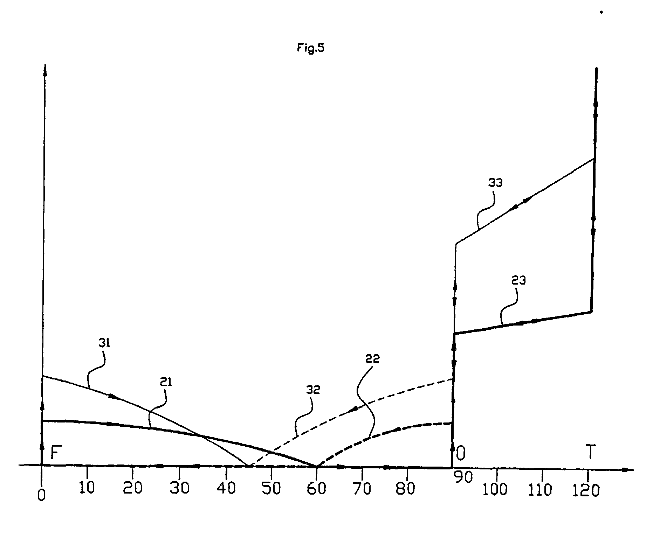

Sur la figure 5, un diagramme présente une comparaison entre une charnière selon l'invention et une charnière élastique classique à ressort utilisant un élément de charnière conformé en came et mobile en rotation autour d'un axe de rotation.

En ordonnée sur le diagramme est reporté en unité linéaire arbitraire le module de l'effort que doit appliquer un utilisateur pour faire pivoter la branche par rapport à la face de la monture. Cet effort est mesuré à une même distance de l'axe de rotation de la charnière dans les deux cas. En abscisse est reporté l'angle de rotation de la branche par rapport à la face. L'abscisse F correspond à la position de fermeture de la branche, l'abscisse O, à la position d'ouverture normale, et l'abscisse T à une ouverture supplémentaire de la branche d'environ 30 degrés par rapport à l'abscisse O. Les courbes correspondants à la charnière selon l'invention sont en traits épais, et celles correspondants à la charnière de comparaison en traits fins. Les traits continus indiquent une ouverture de la monture, et ceux en traits pointillés une fermeture.

La courbe 21 de l'effort d'ouverture de la charnière selon l'invention montre que l'effort d'ouverture de la branche est plus faible que l'effort d'ouverture de la charnière classique. D'où il résulte une sensation de facilité d'ouverture des branches en faveur de la charnière de l'invention.

Lors de la fermeture de la branche, courbe 22, l'effort de fermeture est très faible, ce qui procure une sensation de légèreté, un simple choc suffisant à fermer la monture. Par comparaison, la fermeture de la charnière classique, courbe 32, demande un effort plus important. On note également que l'angle de compensation, c'est-à-dire l'angle pour lequel le couple de rappel créé par la force de traction s'annule, est de l'ordre de 60 degrés pour une charnière selon l'invention, alors qu'il est de 45 degrés pour une charnière à came. Comme cet angle correspond au déclenchement d'une fermeture automatique, il faut accompagner moins longtemps la branche de la charnière selon l'invention pour fermer la monture.

En position d'ouverture supplémentaire, courbe 23, l'effort croît brusquement par effet de seuil pour atteindre un palier. D'où il résulte une sensation de souplesse en ouverture supplémentaire. Par comparaison, l'effort d'ouverture supplémentaire de la charnière classique, courbe 33, croît brusquement puis augmente de façon linéaire avec l'angle de pivotement, ce qui crée une sensation de résistance en constante augmentation.

Les éléments fixe 5 et mobile 7 de la charnière sont avantageusement fabriqués selon un procédé d'injection de matière plastique ou un procédé de moulage par injection de poudre métallique.

La charnière élastique selon l'invention permet à la fois une position de fermeture et d'ouverture stables et une position de surouverture instable. Les têtes de pivotement réalisent ces trois positions sans faire intervenir une vis d'articulation, ce qui supprime le risque d'un dévissage et d'une perte de la vis. Le lien d'assemblage des deux têtes de pivotement est logé dans des canaux, de sorte qu'il est invisible de l'extérieur de la monture. Les têtes de pivotement s'insèrent l'une dans l'autre suivant la direction longitudinale de la branche en un profil continu et ajoutent une esthétique intégrée à la charnière.

## Revendications

1. Charnière élastique de monture de lunettes comprenant deux éléments de charnières fixe (5) et mobile (7) reliés respectivement à une face et à une branche de la monture, articulés l'un par rapport à l'autre autour d'un axe de rotation (R) par une tête de pivotement (7A) de l'un (7) des éléments insérée dans une tête de pivotement (5A) de l'autre élément (5) et par un lien (9) qui est logé en enfilade dans un canal interne (5D,7D) des deux éléments débouchant dans les têtes de pivotement et qui se décale par rapport à l'axe de rotation d'un côté intérieur à un côté extérieur de la monture lorsque la branche pivote par rapport à la face d'une position de fermeture à une position d'ouverture normale, **caractérisée en ce que** chaque tête de pivotement (5A,7A) possède à l'embouchure du canal interne (5D,7D) du côté extérieur de la monture une butée (B1,B2) formant par complémentarité de forme de l'une (B1) avec l'autre (B2) une interface de pivotement autour d'un deuxième axe de rotation (R'), le lien (9) étant disposé entre les deux axes de rotation (R,R') lorsque la branche est dans la position d'ouverture normale de façon que, lors d'une rotation de la branche autour du deuxième axe de rotation, le lien s'appuie sur la surface des butées et ainsi produit une couple de rappel tendant à s'opposer au pivotement des deux éléments de la charnière élastique autour du deuxième axe de rotation.

2. Charnière de monture de lunettes selon la revendication 1, dans laquelle la tête de pivotement mobile (7A) possède deux chamons mâles (7E) insérés entre deux chamons femelles (5E) reliés à la tête de pivotement fixe (5A) par une surface de guidage (S), le lien (9) traversant la surface de guidage (S) et s'enfilant entre les chamons mâles et femelles, **caractérisée en ce que** les chamons mâles (7E) sont tangents à la butée (B2) de l'élément de charnière mobile (7) et la surface de guidage (S) est tangente à la butée (B1) de l'élément de charnière fixe (5).

3. Charnière selon la revendication 1, **caractérisée en ce que** les canaux (5D,7D) de passage du lien (9) débouchent dans les tête de pivotement (5A,7A) par une surface d'enroulement (V1, V2) tournée vers l'intérieur de la monture.

4. Charnière selon la revendication 3, **caractérisée en ce que** les surfaces d'enroulement (V1,V2) possèdent un même rayon de courbure.

5. Charnière selon la revendication 1, **caractérisée en ce que** le lien (9) est fixé à l'élément de charnière fixe (5) par une première douille (11), et à l'élément de charnière mobile (7) par une deuxième douille (13).

6. Charnière selon la revendication 5, **caractérisée en ce que** le lien (9) est par nature élastique.

7. Charnière selon la revendication 5, **caractérisée en ce que** le lien (9) est essentiellement inextensible et est enfilé à l'intérieur d'un ressort hélicoïdal (15) Intercalé entre l'élément de charnière mobile (7) et la deuxième douille (13).

8. Charnière selon la revendication 7, **caractérisée en ce que** le ressort (15) agit en butée de surouverture.

9. Charnière selon la revendication 2, **caractérisée en ce que** les charnons femelles (5E) ont une paroi interne (5F) inclinée par rapport à une direction axiale (A1) de l'élément de charnière fixe (5).

10. Procédé de fabrication d'un élément fixe (5) ou mobile (7) d'une charnière selon l'une des revendications précédentes, **caractérisé en ce qu'**il met en oeuvre un procédé d'injection de matière plastique ou un procédé de moulage par injection de poudre métallique.

## Patentansprüche

1. Elastisches Scharnier für ein Brillengestell mit einem feststehenden (5) und einem beweglichen (7) Scharnierelement, die mit einem Rahmen beziehungsweise mit einem Bügel des Gestelles verbunden und um eine Rotationsachse (R) über einen Schwenkkopf (7A) eines (7) der Elemente, der in einen Schwenkkopf (5A) des anderen Elementes (5) eingefügt ist, und über ein Verbindungsteil (9) in Bezug aufeinander gelenkig sind, das fluchtend in einem innenseitigen, in den Schwenkköpfen mündenden Kanal (5D, 7D) der beiden Elemente angeordnet ist und das sich in Bezug auf die Rotationsachse von einer inneren Seite zu einer äußeren Seite des Gestelles verlagert, während der Bügel in Bezug auf den Rahmen von einer geschlossenen Stellung in eine geöffnete Normalstellung schwenkt, **dadurch gekennzeichnet, dass** jeder Schwenkkopf (5A, 7A) an der Mündung des innenseitigen Kanals (5D, 7D) an der äußeren Seite des Gestelles über einen Anschlag (B1, B2) verfügt, der durch die komplementäre Formgebung des einen (B1) in Bezug auf den anderen (B2) eine Schwenkgrenzfläche um eine zweite Rotationsachse (R') bildet, wobei das Verbindungsteil (9) zwischen den beiden Rotationsachsen (R, R') angeordnet ist, während der Bügel in der geöffneten Normalstellung ist, so dass bei einer Rotation des Bügels um die zweite Rotationsachse das Verbindungsteil an der Oberfläche der Anschläge anliegt und somit eine Rückstellwirkung hervorruft, die dem Schwenken der beiden Elemente des elastischen Scharnieres um die zweite Rotationsachse entgegengerichtet ist.

2. Scharnier für ein Brillengestell nach Anspruch 1, bei dem der bewegliche Schwenkkopf (7A) über zwei männliche Scharnierteile (7E) verfügt, die zwischen zwei weiblichen Scharnierteilen (5E) eingefügt und mit dem feststehenden Schwenkkopf (5A) über eine Führungsfläche (S) verbunden sind, wobei das Verbindungsteil (9) die Führungsfläche (S) quert und zwischen den männlichen und weiblichen Scharnierteilen verläuft, **dadurch gekennzeichnet, dass** die männlichen Scharnierteile (7E) Tangenten zu dem Anschlag (B2) des beweglichen Scharnierteiles (7) sind und die Führungsfläche (S) eine Tangente zu dem Anschlag (B1) des feststehenden Scharnierteiles (5) ist.

3. Scharnier nach Anspruch 1, **dadurch gekennzeichnet, dass** die Durchtrittskanäle (5D, 7D) des Verbindungsteiles (9) innerhalb der Schwenkköpfe (5A, 7A) in einer Abrollfläche (V1, V2) münden, die zur Innenseite des Gestelles geneigt ist.

4. Scharnier nach Anspruch 3, **dadurch gekennzeichnet, dass** die Abrollflächen (V1, V2) den gleichen Krümmungsradius aufweisen.

5. Scharnier nach Anspruch 1, **dadurch gekennzeichnet, dass** das Verbindungsteil (9) mit dem feststehenden Scharnierelement (5) über eine erste Buchse (11) und mit dem beweglichen Scharnierteil (2) über eine zweite Buchse (13) verbunden ist.

6. Scharnier nach Anspruch 5, **dadurch gekennzeichnet, dass** das Verbindungsteil (9) elastisch ist.

7. Scharnier nach Anspruch 5, **dadurch gekennzeichnet, dass** das Verbindungsteil (9) in wesentlichen nicht streckbar und durch den Innenraum einer spiralförmigen Feder (15) geführt ist, die zwischen dem beweglichen Scharnierteil (7) und der zweiten Buchse (13) eingefügt ist.

8. Scharnier nach Anspruch 7, **dadurch gekennzeichnet, dass** die Feder (15) bei einer überweiten Öffnung als Anschlag wirkt.

9. Scharnier nach Anspruch 2, **dadurch gekennzeichnet, dass** die weiblichen Scharnierteile (5E) eine innere Wand (5F) aufweisen, die in Bezug auf eine axiale Richtung (A1) des feststehenden Scharnierteiles (5) geneigt ist.

10. Verfahren zur Herstellung eines feststehenden (5) oder beweglichen (7) Elementes eines Scharnieres nach einem der vorangehenden Ansprüche, **dadurch gekennzeichnet, dass** es ein Spritzgießverfahren mit Kunststoffmaterial oder ein Abformverfahren mit metallischem Pulver verwendet.

## Claims

1. Elastic spectacle-frame hinge comprising two hinge elements, a fixed element (5) and a mobile element (7), which are connected to a front and to a side-piece of the frame respectively and are articulated in relation to one another about an axis of rotation (R) by a pivoting head (7A) on one (7) of the elements, which head is inserted in a pivoting head (5A) on the other element (5), and by a link (9) which is successively accommodated in an internal duct (5D, 7D) in the two elements which opens into the pivoting heads and is offset, in relation to the axis of rotation, from an inner side to an outer side of the frame when the side-piece pivots, in relation to the front, from a closing position to a normal opening position, **characterised in that** each pivoting head (5A, 7A) possesses a stop (B1, B2) at the mouth of the internal duct (5D, 7D) on the outer side of the frame, which stops form, as a result of complementarity of shape of one (B1) with the other (B2), an interface for pivoting about a second axis of rotation (R'), the link (9) being disposed between the two axes of rotation (R, R') when the side-piece is in the normal opening position so that, when the side-piece pivots about the second axis of rotation, the link is supported on the stops thus creating a torque for returning the side-piece that tends to oppose the pivoting of the two elements of the hinge about the second axis of rotation.

2. Spectacle-frame hinge according to claim 1, in which the mobile pivoting head (7A) possesses two male knuckles (7E) inserted between two female knuckles (5E) connected to the fixed pivoting head (5A) by a guide surface (S), the link (9) passing through the guide surface (S) and being threaded between the male and female knuckles, **characterised in that** the male knuckles (7E) are tangent to the stop (B2) on the mobile hinge element (7) and the guide surface (S) is tangent to the stop (B1) on the fixed hinge element (5).

3. Hinge according to claim 1, **characterised in that** the ducts (5D, 7D) for the passage of the link (9) open into the pivoting heads (5A, 7A) via a wind-round surface (V1, V2) which is turned towards the inside of the frame.

4. Hinge according to claim 3, **characterised in that** the wind-round surfaces (V1, V2) possess the same radius of curvature.

5. Hinge according to claim 1, **characterised in that** the link (9) is fixed to the fixed hinge element (5) by a first socket (11), and to the mobile hinge element (7) by a second socket (13).

6. Hinge according to claim 5, **characterised in that** the link (9) is, by nature, elastic.

7. Hinge according to claim 5, **characterised in that** the link (9) is essentially non-extensible and is threaded inside a helical spring (15) intercalated between the mobile hinge element (7) and the second socket (13).

8. Hinge according to claim 7, **characterised in that** the spring (15) acts as an over-opening stop.

9. Hinge according to claim 2, **characterised in that** the female knuckles (5E) have an internal wall (5F) which is inclined in relation to an axial direction (A1) of the fixed hinge element (5).

10. Process for manufacturing a fixed (5) or a mobile element (7) of a hinge according to one of the preceding claims, **characterised in that** it uses a plastic material injection process or a metal powder injection moulding process.
